# EUROPÄISCHE PATENTSCHRIFT

(11) **EP 2 230 181 B1**
(45) Veröffentlichungstag und Bekanntmachung des Hinweises auf die Patenterteilung: **11.07.2012**
(21) Anmeldenummer: 09159242.8
(22) Anmeldetag: 30.04.2009
(51) Int. Cl.: B65B 35/50, B65B 61/24, B65G 47/90, B65G 57/03

(54) **Maschine und Verfahren zur Gruppierung von Behältnissen**
Machine and method for grouping containers
Machine et procédé de groupement de récipients

(30) Priorität: 16.03.2009 DE 102009001586
(43) Veröffentlichungstag der Anmeldung: 22.09.2010
(73) Patentinhaber: Robert Bosch GmbH, 70442 Stuttgart (DE)
(72) Erfinder: Zill, Tobias, 73110 Hattenhofen (DE)

(56) Entgegenhaltungen:
- EP-A1- 1 338 518
- DE-A1- 2 229 108
- US-A- 3 702 584
- US-A- 5 476 361
- US-A1- 2006 070 353

## Beschreibung

Die vorliegende Erfindung betrifft eine Maschine zur Gruppierung von nicht formstabilen, mit einem Schüttgut oder einem pastösen Gut nicht vollständig gefüllten Behältnissen, wie beispielsweise Schlauchbeutel oder Flachbeutel oder sonstige Verpackungen, wobei die Maschine einen Schiebeboden oder dergleichen aufweist, auf den die Behältnisse angeliefert werden.

Die vorliegende Erfindung betrifft auch ein Verfahren zur Gruppierung von nicht formstabilen, mit einem Schüttgut oder einem pastösen Gut nicht vollständig gefüllten Behältnissen, wie beispielsweise Schlauchbeutel oder Flachbeutel zum Zwecke der Verarbeitung in Sekundärverpackungen, wie zum Beispiel Faltschachteln oder andere Varianten von Sammelverpackungen.

Schiebeboden bedeutet im Rahmen der Erfindung, dass der Schlauchbeutel auf einem Boden aufliegt, der entsprechend verschoben oder geklappt werden oder eine Öffnung freigeben kann, um die Schlauchbeutel aus einer ersten Ebene in eine zweite gegenüber der ersten Ebene tiefer angeordnete Ebene auszuwerfen.

Aus der US 2006/070353 A1 ist bereits eine Einrichtung zur Befüllung eines Kartons bekannt. Hierbei werden die zu befüllenden Artikel auf einem vertikalen Stapel gruppiert und über eine Kassette in den bereitstehenden Karton gebracht.

Es sind beispielsweise Verpackungslinien bekannt, die eine Dosiereinheit, eine Schlauchbeutelmaschine, einen Schlauchbeutelgruppierer und einen Kartonierer umfassen.

Die bekannte Verpackungslinie kommt bei der Verpackung von Reis zum Einsatz.

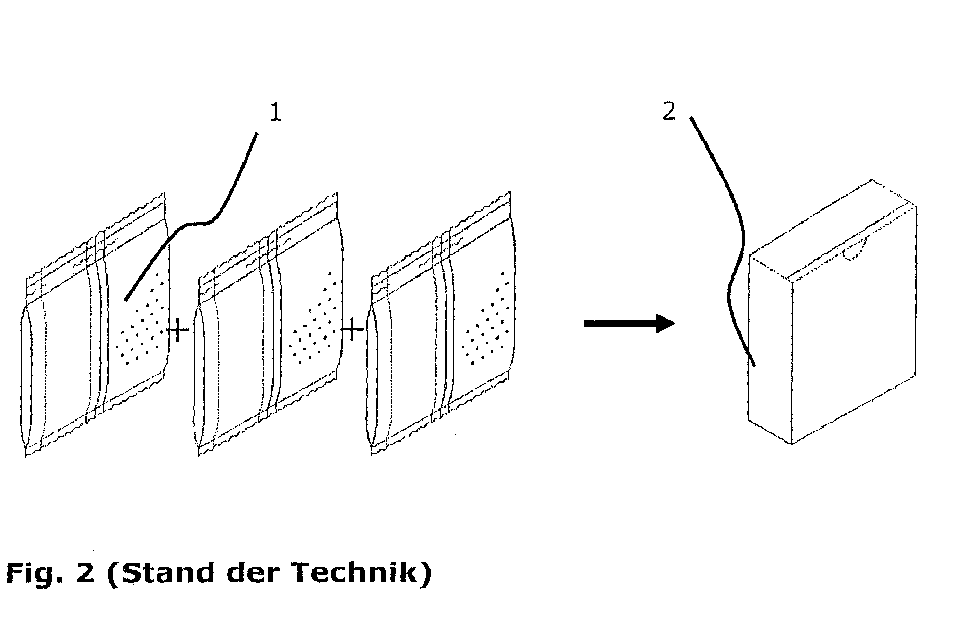

Wie aus der Figur 2 (Stand der Technik) ersichtlich ist, werden mehrere Kochbeutel oder Flachbeutel 1 aus HDPE (High Density Polyethylen), in denen sich der Reis befindet, in eine Faltschachtel 2 als Verkaufsverpackung verpackt. Beim Kochen vergrößert sich das Volumen des Reis. Diese Ausdehnung muss der Kochbeutel 1 zusätzlich aufnehmen können. Aus diesem Grund ist der Kochbeutel 1 nicht vollständig, nur zu 40%, gefüllt. Der Reis kann bei der Verpackung im Kochbeutel 1 hin und her rutschen. Die Form des Kochbeutels 1 kann sich im Gegensatz zur formstabilen Faltschachtel 2 verändern. Neben Reis als Schüttgut sind Folien, Faltschachteln und Umkartons die wesentlichen Bereitstellelemente der Verpackungslinie. Die eigentlichen Aufgaben der Verpackungslinie sind das Portionieren, Formen, Füllen, Verschließen, Kennzeichnen und Gruppieren der Packmittel. Das Formen, Füllen und Verschließen der Kochbeutel wird durch eine Schlauchbeutelmaschine vorgenommen. Anschließend werden die Kochbeutel flachliegend auf einem Transportband an den Schlauchbeutelgruppierer angeliefert. Dabei werden die Kochbeutel 1 egalisiert, d.h. der Reis wird im Beutel gleichmäßig verteilt, so dass der Beutel eine idealtypische flache Form erhält.

Selbstverständlich ist die Erfindung nicht nur bei der Verpackung von Reis-Kochbeuteln anwendbar, sondern wird nur teilweise anhand dieses Beispiels erläutert.

Je nach Verpackungsvariante wird eine unterschiedliche Gruppierung von mehreren Kochbeuteln vorgenommen. In der Regel wird ein Kochbeutel soweit transportiert, dass er auf einem Schiebeboden oder auf einem Klappboden ankommt. In dieser Position muss der Kochbeutel gestoppt werden. Dies kann durch einen mechanischen Anschlag erfolgen. Anschließend öffnet der Schieber oder die Klappe, so dass der Kochbeutel auf eine tiefere Ebene fällt. Durch einen wiederholten Vorgang können Kochbeutel aufeinander fallen und übereinander angeordnet werden.

Auf dem Schiebeboden verrutscht der Reis im Beutel beim Anschlagen auf Grund der Massenträgheit, beim Fallen verstärkt sich der Effekt, und die übereinander liegenden Kochbeutel haben ihre idealtypische Form verloren. Der Stapel ist unvorteilhaft für die weitere Verpackung in die Faltschachtel, weil sich die "deformierten" Reisbeutel nicht mehr gezielt stapeln lassen, sondern vielmehr undefiniert übereinander liegen. Dies erschwert die Einbringung zum Beispiel in eine Faltschachtel. Die ungleichmäßige Verteilung des Reis oder zu verpackenden Guts im Schlauchbeutel führt unter anderem dazu, dass die deformierten Beutel erheblich mehr Platz in der Faltschachtel benötigen, wodurch der Nutzungsgrad des Packstoffes (Faltschachtel) erheblich minimiert wird.

Der Erfindung liegt die Aufgabe zugrunde, die Gruppierung oder Stapelung von nicht formstabilen, nicht vollständig mit einem Schüttgut oder einem pastösen Gut gefüllten Behältnissen zu verbessern.

Diese Aufgabe wird durch eine Maschine zur Gruppierung der eingangs genannten Art gelöst, die eine Positioniereinrichtung mit Mitteln zur Mitnahme des Behältnisses relativ zu dem Schiebeboden aufweist. Die Mittel zur Mitnahme bewegen sich mit Transportgeschwindigkeit, so dass das Behältnis problemlos übernommen und mithilfe der Haftreibung zwischen den Mitteln zur Mitnahme und dem Behältnis exakt eingezogen werden kann. Die Mittel zur Mitnahme (Mitnehmer) liegen mit ihrer Unterseite flächenhaft auf der Oberseite des Behältnisses auf. Daraus resultiert eine Egalisierung des Behältnisses.

Diese Aufgabe wird auch durch ein Verfahren gemäß Patentanspruch 4 gelöst.

Zusammenfassend, besteht die Erfindung in der Ausbildung eines automatischen, definierten Einzugs bis zu einer bestimmten Position auf dem Schiebeboden oder über einer Klappe, so dass die Behältnisse beim Öffnen des Schiebebodens exakt und flach egalisiert aufeinander fallen.

Für einen exakten Einzug ist es vorteilhaft, wenn eine Steuereinheit zur Synchronisation der Geschwindigkeit der Mittel zur Mitnahme und des Transportbandes vorgesehen ist.

Bei einer bevorzugten Ausführungsform sind die Mittel zur Mitnahme durch ein umlaufendes Band ausgebildet.

Bei einer anderen Ausführungsform sind die Mittel zur Mitnahme durch einen beweglichen Stempel oder dergleichen ausgebildet.

Ein bevorzugtes Ausführungsbeispiel der Erfindung ist in der Zeichnung schematisch dargestellt und wird anhand der Figuren erläutert. Es zeigt:
- Figur 1: eine Prinzipdarstellung der Maschine zum Gruppieren von Behältnissen;
- Figur 2: die Gruppierung und Verpackung von Behältnissen (Stand der Technik).

Die Zeichnung zeigt einen Teil einer Verpackungslinie. Eine Dosiereinheit, eine Schlauchbeutelmaschine, ein Schlauchbeutelgruppierer und eine Kartoniermaschine sind an sich Stand der Technik und werden daher hier nicht detailliert beschrieben. Eine Dosiereinheit, eine Schlauchbeutelmaschine und eine Kartoniermaschine sind außerdem nicht Gegenstand der Erfindung.

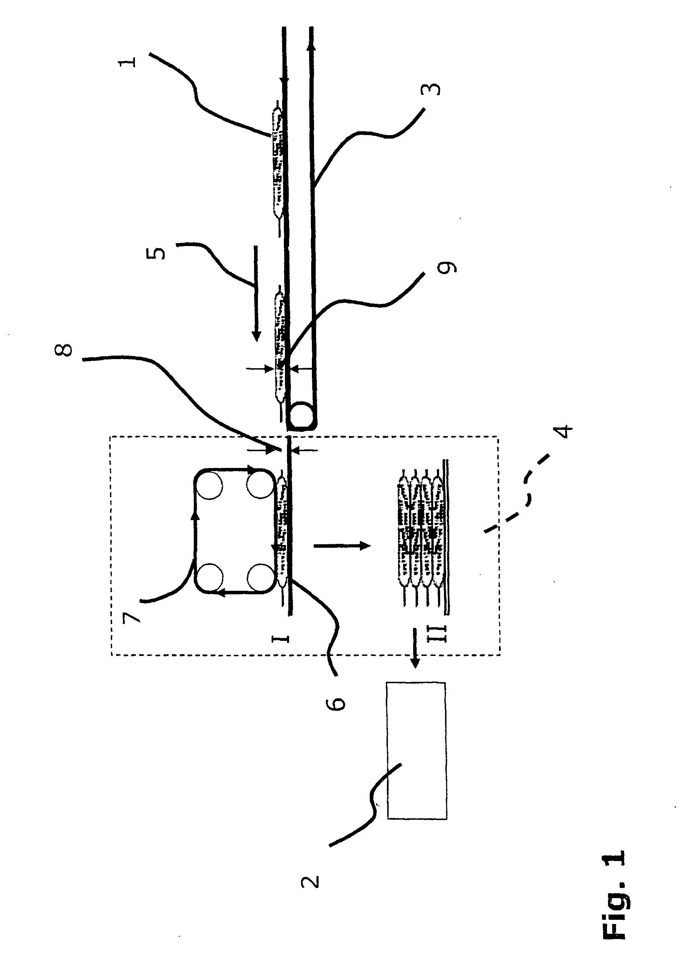

Gemäß Figur 1 werden Schlauchbeutel 1 mit portioniertem Schüttgut flachliegend auf einem kontinuierlich angetriebenen Transportband 3 an eine Maschine 4 zum Gruppieren in Transportrichtung 5 angeliefert. Die Schlauchbeutel 1 sind nicht formstabil und auch nicht vollständig, d.h. nur zu etwa 40 %, gefüllt. Daher wurden die Schlauchbeutel 1 vor dem Transport egalisiert. Folglich besitzen die Schlauchbeutel 1 eine nahezu idealtypische Form. Die Maschine 4 weist einen Schiebeboden 6 auf. Zunächst läuft ein Schlauchbeutel 1 über das Transportband 5 auf den Schiebeboden 6 in Ebene I ein, indem der Schlauchbeutel 1 von einem Einzugsband 7 erfasst wird. Hierzu ist der Spalt 8 dem Einzugsband 7 und dem Schieberboden 6 idealer Weise gleich hoch oder minimal höher als der idealtypisch egalisierte Schlauchbeutel 1. Das zuschaltbare, nicht kontinuierlich bewegte Einzugsband 7 zieht den Schlauchbeutel 1 solange ein, bis sich der Schlauchbeutel 1 vollkommen von dem Einzugsband 7 erfasst ist, verzögert dann bis zum Stillstand, wodurch der Schlauchbeutel 11 eine definierte Position auf dem Schiebeboden 6 einnimmt. Durch das Öffnen des Schiebebodens 6 oder der Klappe wird der Schlauchbeutel 1 aus der Ebene I an Ebene II weitergegeben. Das Format der Gruppierung ist mithilfe des Einzugsbandes 7 sehr genau einstellbar. Durch das mehrmalige Abwerfen der Schlauchbeutel 1 entsteht ein Stapel in Ebene II.

Der Stapel Schlauchbeutel 1 kann durch die kontinuierlich arbeitende Kartoniermaschine in eine Faltschachtel 2 eingeführt werden.

## Patentansprüche

1. Maschine (4) zur Gruppierung von nicht formstabilen, mit einem Schüttgut oder einem pastösen Gut nicht vollständig gefüllten Behältnissen (1), wie beispielsweise Schlauchbeutel oder Flachbeutel, wobei die Maschine (4) einen Schiebeboden (6) oder dergleichen aufweist, auf den die Behältnisse (1) angeliefert werden, wobei die Maschine (4) eine Positioniereinrichtung mit Mitteln (7) zur Mitnahme des Behältnisses (1) relativ zu dem Schiebeboden (6) aufweist, **dadurch gekennzeichnet, dass** ein Spalt zwischen den Mitteln (7) und dem Schiebeboden oder dergleichen (6) eine Höhe (8) aufweist, die der Höhe (9) eines egalisierten Behältnisses (1) entspricht, wobei sich die Mittel (7) zur Mitnahme mit Transportgeschwindigkeit bewegen, so dass das Behältnis (1) übernommen und mithilfe der Haftreibung zwischen den Mitteln (7) zur Mitnahme und dem Behältnis eingezogen wird, und wobei die Mittel (7) zur Mitnahme mit dem Spalt beabstandet gegenüber dem Schiebeboden oder dergleichen (6) in der Weise angeordnet sind, dass die Mittel (7) zur Mitnahme mit ihrer Unterseite auf der Oberseite des Behältnisses flächenhaft aufliegen.

2. Maschine nach Anspruch 1, **dadurch gekennzeichnet, dass** die Mittel durch ein antreibbares Einzugsband (7) ausgebildet sind.

3. Maschine nach Anspruch 1, **dadurch gekennzeichnet, dass** die Mittel durch einen bewegbaren Stempel ausgebildet sind.

4. Verfahren zur Gruppierung von nicht formstabilen, mit einem Schüttgut oder einem pastösen Gut nicht vollständig gefüllten Behältnissen (1), wie beispielsweise Schlauchbeutel oder Flachbeutel, **dadurch gekennzeichnet, dass** das Behältnis (1) durch Mittel (7) zum Einzug auf eine Auflagefläche (Ebene I) gezogen wird und auf der Auflagefläche positioniert wird, wobei in der Auflagefläche anschließend eine Öffnung freigegeben wird, um das Behältnis auf eine Ebene II abzuwerfen, wobei die Mittel (7) zum Einzug mit ihrer Unterseite flächenhaft auf der Oberseite des Behältnisses (1) aufliegen.

## Claims

1. Machine (4) for grouping containers (1) which are not dimensionally stable, for example tubular bags or flat bags, and are not completely filled with a bulk material or a pasty material, wherein the machine (4) has a sliding floor (6) or the like onto which the containers (1) are supplied, wherein the machine (4) has a positioning device with means (7) for carrying along the container (1) relative to the sliding floor (6), **characterized in that** a gap between the means (7) and the sliding floor or the like (6) has a height (8) which corresponds to the height (9) of a levelled-out container (1), wherein the carrying-along means (7) move at transporting speed, and therefore the container (1) is received and drawn in with the aid of the static friction between the carrying-along means (7) and the container, and wherein the carrying-along means (7) are spaced apart from the sliding floor or the like (6) by the extent of the gap such that the carrying-along means (7) have their underside resting with surface contact on the upper side of the container.

2. Machine according to Claim 1, **characterized in that** the means are designed in the form of a drivable drawing-in belt (7).

3. Machine according to Claim 1, **characterized in that** the means are designed in the form of a movable ram.

4. Method of grouping containers (1) which are not dimensionally stable, for example tubular bags or flat bags, and are not completely filled with a bulk material or a pasty material, **characterized in that** the container (1) is drawn onto a bearing surface (level I), and positioned on the bearing surface, by drawing-in means (7), wherein an opening is then released in the bearing surface in order for the container to be discharged onto a level II, wherein the drawing-in means (7) have their underside resting with surface contact on the upper side of the container (1).

## Revendications

1. Machine (4) de groupement de récipients (1) de forme non stable et non remplis complètement avec un produit en vrac ou un produit pâteux, comme par exemple des sachets tubulaires ou des sachets plats, la machine (4) comprenant un fond coulissant (6) ou similaire, sur lequel les récipients (1) sont fournis, la machine (4) comprenant un dispositif de positionnement doté de moyens (7) d'entraînement du récipient (1) par rapport au fond coulissant (6), **caractérisée en ce qu'**un interstice entre les moyens (7) et le fond coulissant ou similaire (6) présente une hauteur (8) qui correspond à la hauteur (9) d'un récipient égalisé (1), les moyens (7) d'entraînement se déplaçant à la vitesse de transport de telle sorte que le récipient (1) soit repris et introduit à l'aide du frottement d'adhérence entre les moyens (7) d'entraînement et le récipient, et les moyens (7) d'entraînement dotés de l'interstice étant disposés à distance par rapport au fond coulissant ou similaire (6) de telle sorte que les moyens (7) d'entraînement, par l'intermédiaire de leur côté inférieur, reposent à plat sur le côté supérieur du récipient.

2. Machine selon la revendication 1, **caractérisée en ce que** les moyens sont réalisés par une bande d'introduction entraînable (7).

3. Machine selon la revendication 1, **caractérisée en ce que** les moyens sont réalisés par un piston déplaçable.

4. Procédé de groupement de récipients (1) de forme non stable et non remplis complètement avec un produit en vrac ou un produit pâteux, comme par exemple des sachets tubulaires ou des sachets plats, **caractérisé en ce que** le récipient (1) est tiré sur une surface d'appui (plan I) par des moyens (7) d'introduction et positionné sur la surface d'appui, une ouverture étant ensuite libérée dans la surface d'appui, afin d'éjecter le récipient sur un plan II, les moyens (7) d'introduction reposant à plat sur le côté supérieur du récipient (1) par l'intermédiaire de leur côté inférieur.
